# EUROPÄISCHE PATENTSCHRIFT

(11) **EP 3 037 694 B1**
(45) Veröffentlichungstag und Bekanntmachung des Hinweises auf die Patenterteilung: **04.10.2017**
(21) Anmeldenummer: 15198261.8
(22) Anmeldetag: 12.01.2015
(51) Int. Cl.: F16J 9/06, F16J 9/20

(54) **REIBOPTIMIERTER ÖLABSTREIFRING**
FRICTION-OPTIMISED OIL SCRAPER RING
SEGMENT RACLEUR D'HUILE À FRICTION OPTIMISÉE

(30) Priorität: 28.04.2014 DE 102014207895
(43) Veröffentlichungstag der Anmeldung: 29.06.2016
(62) Teilanmeldung aus: 15700223.9
(73) Patentinhaber: Federal-Mogul Burscheid GmbH, 51399 Burscheid (DE)
(72) Erfinder: PRÖPPER, Jörn, 51375 Leverkusen (DE); RUCH, Fabian Horst, 51375 Leverkusen (DE)
(74) Vertreter: Becker Kurig Straus

(56) Entgegenhaltungen:
- WO-A1-02/097310
- WO-A1-2013/010520
- WO-A1-2013/178204
- DE-B3- 10 322 032

## Beschreibung

Die vorliegende Erfindung betrifft einen reiboptimierten Ölabstreifring für Kolbenmotoren, insbesondere für Verbrennungsmotoren.

Bisherige Ölabstreifringe umfassen üblicherweise 2 Abstreifstege oder "Rails", die parallel an eine Zylinderinnenwand gedrückt werden. Es ist weiterhin bekannt, Öl-Abstreifringe mit Löchern oder Schlitzen zu versehen, um das abgestreifte Öl über den Grund einer Ringnut und Kanäle in einem Kolben zurück in eine Ölwanne zu befördern. Es ist ebenfalls üblich, eine Ringfeder bzw. eine Schlauchfeder oder einen Expander bei einem Öl-Abstreifring einzusetzen, um eine möglichst gleichmäßige Andruckverteilung zu erreichen. Es ist bereits eine unübersehbare Menge an Ölabstreifringen bekannt, daher wird hier nur auf das deutsche Gebrauchsmuster 8503197, das Europäische Patent EP 1248022 B1, die deutsche Patentschrift DE 10322032B3 sowie die Europäischen Patentschrift EP 0857900 B1 verwiesen.

WO 2013/178204 A1 offenbart einen Ölabstreifring, der zwei Abstreifstege mit dazwischenliegender Nut aufweist, wobei die Laufstegflanken in der Nähe des Nutgrunds parallel verlaufen und wobei an den freien Enden der Abstreifstege Abschnitte vorgesehen sind, in denen die Breite der Laufstege verkleinert wird, um die Laufflächenstege insbesondere mit einem vorgebbaren Außenprofil zu versehen. Weiterhin ist ein Verfahren zur Herstellung eines solchen Ölabstreifrings offenbart.

Es ist eine Aufgabe der vorliegenden Erfindung, einen Ölabstreifring bereit zu stellen, der eine geringere Reibung aufweist.

Diese Aufgabe wird gelöst mit einem Kolbenring mit den Merkmalen des unabhängigen Anspruchs 1, Bevorzugte Ausführungen sind in den abhängigen Ansprüchen beschrieben.

In einer Ausführungsform des erfindungsgemäßen Ölabstreifrings für einen Kolben eines Kolbenmotors umfasst dieser einen Ringkörper und (nur) einen umlaufenen Öl-Abstreifsteg. Der Ölabstreifring weist zwischen einer oberen Ringflanke und einer unteren Ringflanke eine Dicke zwischen 2 und 5 mm auf. Die Lauffläche des Abstreifstegs weist in einem radialen Querschnitt einen Krümmungsradius r zwischen 1/40 bis 1/10 der Höhe H auf. Bevorzugt ist nur ein Abstreifsteg vorgesehen, mehr als einer ist ausgeschlossen. Die Lauffläche bildet einen Wendel bzw. der Abstreifsteg verläuft wendelförmig, wie ein Gewindegang.

Der Begriff "radialer Querschnitt" soll einen Schnitt in einer Ebene beschreiben, in dem die Symmetrie- bzw. Rotationsachse des Rings bzw. des Zylinders liegt, in dem der Kolbenring betrieben werden soll. Der Begriff "radialer Querschnitt" ist damit senkrecht zu einer Tangentialebene und senkrecht zu der Ringebene, in der sich der Kolbenring erstreckt.

In einer weiteren beispielhaften Ausführungsform des Ölabstreifrings weist der Ölabstreifring eine Höhe von 2,5 bis 4 mm auf. In einer zusätzlichen Ausführungsform des Ölabstreifrings weist der Ölabstreifring eine Höhe von 3 bis 3,5mm auf.

In einer anderen beispielhaften Ausführungsform des Ölabstreifrings beträgt der Krümmungsradius der Lauffläche 1/30 bis 1/15 der Höhe des Ölabstreifrings. In einer weiteren beispielhaften Ausführungsform des Ölabstreifrings beträgt der Krümmungsradius der Lauffläche 1/25 bis 1/20 der Höhe des Ölabstreifrings.

In einer zusätzlichen beispielhaften Ausführungsform des Ölabstreifrings umfass dieser weiter einen Expander.

In einer weiteren beispielhaften Ausführungsform des Ölabstreifrings ist der Ölabstreifring mit einer Schlauchfederanordnung oder mit zwei Schlauchfedern versehen.

In einer zusätzlichen weiteren beispielhaften Ausführungsform des Ölabstreifrings ist ein Rücken des Abstreifsteges mit einer Verschleißschutzbeschichtung beschichtet.

Gemäß einer weiteren zusätzlichen beispielhaften Ausführungsform ist der Ölabstreifring an zumindest der Lauffläche mit einer Verschleißschutzbeschichtung versehen. Gemäß einer zusätzlichen beispielhaften Ausführungsform ist der Ölabstreifring an zumindest der Lauffläche mit einer "Diamond-like-Carbon"-Beschichtung versehen. Gemäß einer weiteren beispielhaften Ausführungsform ist der Ölabstreifring an zumindest der Lauffläche mit einer amorphen hoch-harten Carbon-basierten Schicht beschichtet, welche die Schmierfähigkeit verbessert und eine Härte von bis zu 5000 HV 0.2 sowie eine Temperaurbeständigkeit von bis zu 500°C sowie eine Beschichtungsdicke von bis zu 25 µm aufweist. Bevorzugt weist die amorphe hoch-harte Carbon-basierten Schicht eine Härte zwischen 4000 und 5000 HV 0.2 sowie eine Temperaurbeständigkeit zwischen 450 und 500°C sowie eine Beschichtungsdicke zwischen 15 und 25 µm, bevorzugt zwischen 20 und 25µm auf.

Gemäß einer anderen beispielhaften Ausführungsform weist der Ölabstreifring eine Lauffläche des Abstreifsteges auf, die durch einen umlaufenden Draht aus einem hochfesten Material gebildet ist. Dabei kann der Bereich der Lauffläche des Ölabstreifrings deutlich stärker ausgeführt werden als das restliche Material des Ölabstreifrings.

Bei einer zusätzlichen beispielhaften Ausführungsform des Ölabstreifrings ist die obere Stegflanke in einem Schnitt entlang der Achse konvex geformt. Dadurch kann die Abstreifwirkung bei einer Aufwärtsbewegung des Kolbens verringert werden.

Bei einer anderen beispielhaften Ausführungsform des Ölabstreifrings ist die untere Stegflanke in einem Schnitt entlang der Achse konkav geformt. Dadurch kann die Abstreifwirkung bei einer Abwärtsbewegung des Kolbens verbessert werden.

Bei einer weiteren beispielhaften Ausführungsform des Ölabstreifrings beträgt die Tangentialkraft des Ölabstreifrings oder die Tangentialkraft der Ringfeder bzw. der Schlauchfeder 52% bis 68%, bevorzugt 55% bis 65%, weiter bevorzugt 57% bis 63% eines Ölabstreifrings mit zwei Abstreifstegen.

In einer zusätzlichen beispielhaften Ausführungsform des Ölabstreifrings umfasst dieser keine radialen Ölkanäle.

In einer weiteren beispielhaften Ausführungsform des Ölabstreifrings ist die Lauffläche im Bereich des Ringspalts jeweils in Umlaufrichtung verlängert und die Laufflächen überlappen einander in Umlaufrichtung. In dieser Ausführungsform wird der Ringspalt an dem nunmehr einen Abstreifsteg durch eine Überlappung weiter abgedichtet. Diese Überlappung ist nur möglich, da der einzelne Abstreifsteg seine Position in Axialrichtung über den Umfang verändert. In einer Ausführungsform bildet der Abstreifsteg etwas mehr als einen Gewindegang, der sich am Ringspalt überlappt. Es sollte dem Fachmann klar sein wie ein Ringspalt zu gestalten ist, um eine derartige Überlappung zu ermöglichen. Die Überlappung kann dabei lediglich wenige bis einige mm betragen.

In einer weiteren zusätzlichen beispielhaften Ausführungsform des Ölabstreifrings ist die Lauffläche oder der gesamte Ölabstreifring mit mehreren Beschichtungen überzogen. Mehrere Beschichtungen können die Haftung einer Schicht verbessern. Mehrere Schichten können auch Spannungssprünge in dem Kolbenring an den Schichtgrenzen verringern und so die Lebensdauer einer Beschichtung verbessern. Es ist ebenso vorgesehen, eine Beschichtung erst nach einer Nitrierung eines Teils oder der gesamten Oberfläche des Ölabstreifrings aufzubringen. Eine Beschichtung kann auf die Lauffläche, auf die gesamte Außenfläche oder auf die gesamte Oberfläche des Ölabstreifrings aufgebracht werden.

Im Folgenden wird die Erfindung anhand von schematischen Figuren von ausgewählten Ausführungsformen verdeutlicht.
Figur 1 zeigt einen Querschnitt durch einen Ölabstreifring.
Figur 2 zeigt den Ölabstreifring von Figur 1 mit einer zusätzlichen Beschichtung.
Figur 3 zeigt den Ölabstreifring von Figur 1, bei dem die Lauffläche durch einen Draht aus verschleißfestem Material gebildet ist.
Figur 4 zeigt eine Ansicht des Ölabstreifrings von Figur 3, bei dem erkennbar ist wie die Lauffläche einen Gewindegang bildet.

Detaillierte Beschreibung der Figuren.

Sowohl in der Beschreibung als auch in den Figuren werden gleiche oder ähnliche Bezugszeichen verwendet, um auf gleiche oder ähnliche Elemente und Komponenten Bezug zu nehmen.

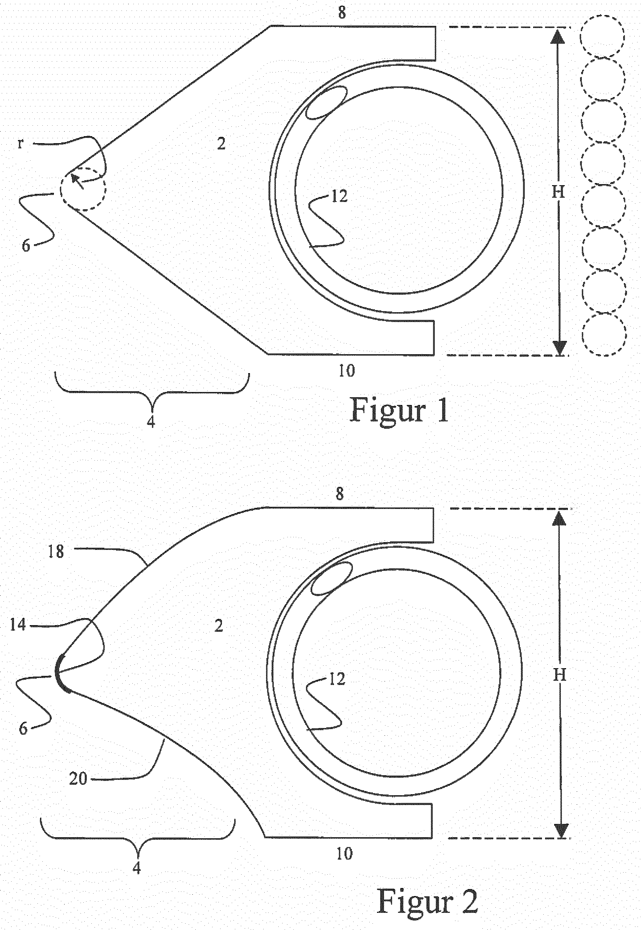

Figur 1 zeigt einen Querschnitt durch einen nicht beanspruchten Kolbenring 2. Der Ölabstreifring 2 stellt einen Ölabstreifring mit lediglich einem Ölabstreifsteg 4 dar, der an einem Ringkörper angeformt ist. Der Ölabstreifring 2 weist zwischen einer oberen Ringflanke 8 und einer unteren Ringflanke 10 eine Höhe H von 2 bis 5 mm auf. Die Lauffläche 6 des Abstreifstegs weist in einem radialen Querschnitt einen Krümmungsradius r zwischen 1/40 bis 1/10 der Höhe (H) auf. Insgesamt ist der Ölabstreifring mit einem sehr kleinen Krümmungsradius r an dem Rücken des Abstreifstegs 4 versehen. Dieses ermöglicht ein Abstreifen des Öls durch einen einzelnen Abstreifsteg. Unter der Annahme, dass das aus dem System beförderte Öl nicht mehr für die Hydrodynamik relevant sein kann, lässt sich schließen, dass der übliche zweite Abstreifsteg keine besondere Wirkung (außer Reibung) entfalten kann. Die Abstreifwirkung und damit der hinterlassene Ölfilm sind abhängig von der Abstreifgeschwindigkeit, der Ölviskosität und der Flächenpressung. Damit kann der zweite Abstreifsteg keinen besonderen Effekt mehr entfalten. Es ist zu erwarten, dass bei Systemen mit zwei Laufflächenstegen der obere Steg bei einer Abwärtsbewegung keinen signifikant geringeren Ölfilm hinterlassen kann als der untere Steg.

Der dargestellte Ölabstreifring 2 weist einen Krümmungsradius r auf, der etwa dem 15,5 ten Teil der Höhe H entspricht. Es sind jedoch auch andere Abmessungen bzw. Abmessungs-Verhältnisse möglich. Es sind größere und kleinere Krümmungsradien r zwischen 1/40 bis 1/30 H möglich. Es können sich auch Krümmungsradien r zwischen 1/30 und 1/25 H als vorteilhaft erweisen. Es sind ebenfalls Krümmungsradien zwischen 1/25 und 1/20 H möglich. Weiterhin können je nach Abmessungen des Kolbenrings Krümmungsradien r zwischen 1/20 und 1/15 H bevorzugt werden. Es ist ebenfalls vorgesehen Krümmungsradien zwischen 1/15 und 1/10 H einzusetzen. Vor allem bei Verwendung einer Schlauchfeder oder mehrerer Schlauchfedern ineinander kann der Krümmungsradius an den unteren oder oberen Grenzen der vorstehend angegebenen Bereiche gewählt werden.

Der dargestellte Ölabstreifring 2 weist eine Höhe H von 5 mm auf er kann jedoch bevorzugt eine Höhe zwischen 2,5 und 4 mm oder zwischen 3 bis 3,5mm aufweisen.

Der Krümmungsradius wird dabei direkt an der Kontaktstelle des Abstreifrings mit einer Zylinderinnenwand betrachtet. Ein Verschleiß kann daher diese Eigenschaften verändern.

In der Figur 1 ist der Ölabstreifring 2 mit einem Expander versehen, der als Schlauchfeder ausgeführt ist.

Figur 2 zeigt den Ölabstreifring 2 von Figur 1 mit einer zusätzlichen Beschichtung 14. Die Beschichtung 14 kann aus einem verschleißfesten Material hergestellt sein. Hier wird trotz der Abrundung und einem erhöhten Anpressdruck eine hohe Laufleistung durch die Beschichtung 14 erreicht. Um selbst unter den schwierigsten Bedingungen richtig arbeiten zu können, kann eine Hartschicht oder eine andere Beschichtung aus Diamond-like Carbon verwendet werden.

Als Beschichtung 14 kann eine Hartschicht oder eine andere Diamond-like-Carbon Beschichtung verwendet werden.

Diamond-like-Carbon Beschichtungen umfassen tetraedrische wasserstofffreie amorphe Kohlenstoffschichten, auch "ta-C" genannt, die sp³-hybridisierte Bindungen umfassen, weshalb sie den Diamantschichten gleichzusetzen sind. Eine derartige hoch-harte amorphe Carbon-basierte Schicht kann die Schmierfähigkeit verbessern und eine Härte von 4000 bis zu 5000 HV 0.2 sowie eine Temperaurbeständigkeit von 470 bis zu 500°C sowie eine Beschichtungsdicke von 18µm bis zu 25 µm umfassen. Vor allem eine große Dicke der "ta-C" Schicht ermöglicht einen langen Einsatz auch bei nur einer hochbelasteten Lauffläche einer einzelnen Abstreifschiene 4.

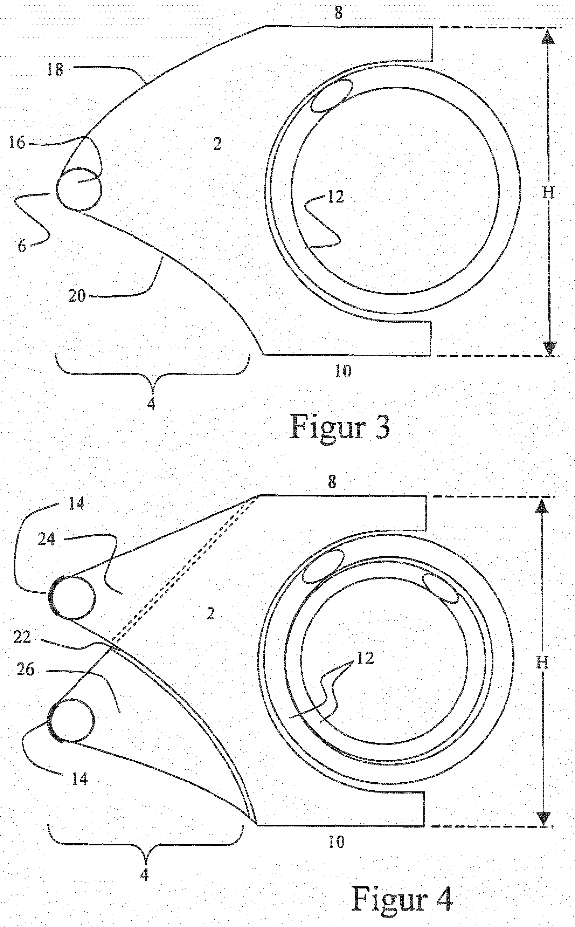

In Figur 3 ist die Lauffläche 6 zwischen der oberen 8 und der unteren Ringflanke 10 angeordnet. Dieser Ölabstreifring kann mit einer zwischen 52% und 55% oder zwischen 55% und 57% der Tangentialkraft eines herkömmlichen Ölabstreifrings betreiben werden. Es ist jedoch aufgrund der festeren Beschichtung ebenfalls möglich, den Ölabstreifring mit 57 % bis 63% oder 63% bis 68% der Tangentialkraft eines herkömmlichen Ölabstreifrings zu versehen. Durch die extrem harte Oberfläche der runden Abstreifkante sind selbst die erhöhten Tangentialdrücke möglich, die bei herkömmlichen Ölabstreifringen bei gleichen Flächenpressungen zu einem erhöhten Verschleiß führen würden.

Es ist ebenfalls möglich, die gesamte Oberfläche des Ölabstreifrings mit einer ta-C Schicht zu versehen.

In Figur 3 ist die obere Stegflanke 18 des Ölabstreifrings konvex geformt. Die untere Stegflanke 20 des Ölabstreifrings 2 ist hingegen in der Schnittdarstellung konkav geformt.

Figur 3 zeigt den Kolbenring von Figur 1, bei dem die Lauffläche 6 des Ölabstreifrings 2 durch einen Draht aus verschleißfestem Material gebildet ist. Der Draht ist als Runddraht ausgeführt, kann jedoch auch andere Querschnitte aufweisen. Durch den Draht kann ein weniger starres Material für einen Ringkörper des Ölabstreifrings 2 verwendet werden. In dieser Ausführung kann der Ölabstreifring flexibler ausgeführt werden, da nur in dem Drahtteil eine hohe Festigkeit notwendig ist. Dadurch kann der Ring so gestaltet werden, dass lediglich die Schlauchfeder 12 die Tangentialkraft erzeugt. Durch diese Bauweise kann auch die Bruchgefahr bei der Montage verringert werden. Wie in Figur 2 sind die obere und untere Stegflanke 18, 20 jeweils konvex und konkav gekrümmt.

Figur 4 zeigt eine andere Ausführung des Kolbenrings von Figur 3, bei dem die Lauffläche durch einen Draht aus verschleißfestem Material gebildet ist und bei dem die Lauffläche zusätzlich mit einer Verschleißschutzbeschichtung versehen ist. Zusätzlich ist zu erkennen, dass die Lauffläche nicht in einer konstanten Höhe bzw. mit einem konstanten Abstand zu der Ringflanke angeordnet ist. Die Lauffläche 6 senkt sich wie ein Gewindegang bzw. ein Wendel von einem Ende zu dem anderen Ende des Rings. Durch diesen Verlauf sind die Laufflächen am Ringspalt versetzt zueinander angeordnet, wodurch der Spalt von jedem der Enden überbückt werden kann, sodass sich die Enden in Umfangsrichtung bzw. je nach Betrachtungsweise in Axialrichtung überlappen. Dadurch können Gas- und Ölflüsse am Ringspalt verringert werden.

Ein wendelförmig verlaufender Abstreifsteg kann zudem ein Drehen bzw. Wandern des Rings in der Kolbenringnut begünstigen, sowie die Ölverteilung in Umfangsrichtung verbessern.

Weiterhin sind in der Ausführungsform von Figur 4 zwei Schlauchfedern 12 dargestellt, die einen noch größeren Anteil an der Tangentialkraft übernehmen.

Alle Ausführungsformen sind ohne radiale Ölkanäle dargestellt, da durch die Geometrie einer konkaven unteren Stegflanke ein hinreichend großes Ölrückhaltevolumen bereitgestellt werden kann.

Die in den Figuren dargestellten Ausführungen betreffen lediglich beispielhafte Ausführungen. Aus Gründen der Übersichtlichkeit sollten jedoch auch alle anderen Kombinationen von Merkmalen als offenbart angesehen werden, wie sie sich aus Kombinationen verschiedener Figuren kombinieren lassen. Insbesondere kann die Abstreiflippe wendelförmig verlaufen und keinen Draht an der Abstreifkante umfassen.

### Bezugszeichenliste

- 2: Kolbenring
- 4: Öl-Abstreifsteg
- 6: Lauffläche
- 8: obere Ringflanke
- 10: untere Ringflanke
- 12: Schlauch bzw. Ringfeder
- 14: Beschichtung
- 16: Draht
- 18: obere Stegflanke
- 20: untere Stegflanke
- 22: Ringspalt
- 24: oberes Ende des Stegs
- 26: unteres Ende des Stegs

## Patentansprüche

1. Ölabstreifring (2) für einen Kolben eines Kolbenmotors mit
einem Ringkörper (2),
einem umlaufenen Öl-Abstreifsteg (4),
wobei der Ölabstreifring (2) zwischen einer oberen Ringflanke (8) und einer unteren Ringflanke (10) eine Höhe (H) von 2 bis 5 mm aufweist,
wobei die Lauffläche (6) des Abstreifstegs in einem radialen Querschnitt einen Krümmungsradius (r) aufweist, der zwischen 1/40 bis 1/10 der Höhe (H) beträgt, **dadurch gekennzeichnet, dass** die Lauffläche (6) einen Wendel bildet.

2. Ölabstreifring (2) gemäß Anspruch 1, **dadurch gekennzeichnet, dass** der Ölabstreifring (2) eine Höhe (H) von 2,5 bis 4 mm, bevorzugt von 3 bis 3,5mm aufweist.

3. Ölabstreifring (2) gemäß Anspruch 1 oder 2, **dadurch gekennzeichnet, dass** der Krümmungsradius (r) der Lauffläche (6) 1/30 bis 1/15, bevorzugt 1/25 bis 1/20 der Höhe (H) des Ölabstreifrings beträgt.

4. Ölabstreifring (2) gemäß Anspruch 1, 2 oder 3, **dadurch gekennzeichnet, dass** der Ölabstreifring (2) weiter einen Expander (12) umfasst.

5. Ölabstreifring (2) gemäß Anspruch 1, 2, 3 oder 4, **dadurch gekennzeichnet, dass** der Expander (12) eine Schlauchfederanordnung mit einer oder zwei Schlauchfedern (12) umfasst.

6. Ölabstreifring (2) gemäß einem der vorstehenden Ansprüche, **dadurch gekennzeichnet, dass** ein Rücken des Abstreifsteges (4) mit einer Verschleißschutzbeschichtung (14) beschichtet ist.

7. Ölabstreifring (2) gemäß Anspruch 6, **dadurch gekennzeichnet, dass** die Beschichtung (14) Diamond-like-Carbon oder eine amorphe hoch-harte Carbon-basierte Schicht ist, welche die Schmierfähigkeit verbessert und eine Härte von bis zu 5000 HV 0,2 sowie eine Temperaurbeständigkeit von bis zu 500°C sowie eine Beschichtungsdicke von bis zu 25 µm umfasst.

8. Ölabstreifring (2) gemäß einem der vorstehenden Ansprüche, **dadurch gekennzeichnet, dass** die Lauffläche (6) des Abstreifsteges (4) durch einen umlaufenden Draht (16) aus einem hochfesten Material gebildet ist.

9. Ölabstreifring (2) gemäß einem der vorstehenden Ansprüche, **dadurch gekennzeichnet, dass** die obere Stegflanke (18) in einem Schnitt entlang der Achse konvex geformt ist.

10. Ölabstreifring (2) gemäß einem der vorstehenden Ansprüche, **dadurch gekennzeichnet, dass** die untere Stegflanke (20) in einem Schnitt entlang der Achse konkav geformt ist.

11. Ölabstreifring (2) gemäß einem der vorstehenden Ansprüche, **dadurch gekennzeichnet, dass** eine Tangentialkraft des Ölabstreifrings (2) und/oder eine Tangentialkraft der Schlauchfeder (12) 52% bis 68%, bevorzugt 55% bis 65%, weiter bevorzugt 57% bis 63% der Tangentialkraft eines Ölabstreifrings mit zwei Abstreifstegen entspricht.

12. Ölabstreifring (2) gemäß einem der vorstehenden Ansprüche, **dadurch gekennzeichnet, dass** der Ölabstreifring (2) keine radialen Ölkanäle umfasst.

13. Ölabstreifring (2) gemäß einem der Ansprüche I bis 12, **dadurch gekennzeichnet, dass** die Laufflächen (6) im Bereich des Ringspaltes (22) jeweils in Umlaufrichtung verlängert sind und einander in Axialrichtung überlappen.

## Claims

1. Oil scraper ring (2) for a piston of a piston engine,
with an annular body (2),
an encircling oil-scraper blade (4),
wherein the oil-scraper ring (2) has a height (H) from 2 to 5 mm between an upper ring flank (8) and a lower ring flank (10),
wherein the running surface (6) of the oil-scraper blade has a radius of curvature (r) in a radial cross-section which is between 1/40 to 1/10 of height (H),
**characterized in that** the running surface (6) forms a helix.

2. Oil-scraper ring (2) according to claim 1, **characterized in that** the oil-scraper ring (2) has a height (H) from 2.5 to 4 mm, preferably from 3 to 3.5 mm.

3. Oil-scraper ring (2) according to claim 1 or 2, **characterized in that** the radius of curvature (r) of the running surface (6) is equal to 1/30 to 1/15, preferably 1/25 to 1/20 of the height (H) of the oil-scraper ring.

4. Oil-scraper ring (2) according to claim 1, 2 or 3, **characterized in that** the oil-scraper ring (2) further comprises an expander (12).

5. Oil-scraper ring (2) according to claim 1, 2, 3 or 4, **characterized in that** the oil-scraper ring (2) is a garter spring assembly with one or two garter springs (12).

6. Oil-scraper ring (2) according to any one of the preceding claims, **characterized in that** a back of the oil-scraper blade (4) is coated with a wear-resistant coating (14).

7. Oil-scraper ring (2) according to claim 6, **characterized in that** the coating (14) is diamond-like carbon or an amorphous high-strength carbon-based layer which improves the lubricity and has a hardness of up to 5000 HV 0.2 and temperature stability of up to 500 °C and a coating thickness of up to 25 µm.

8. Oil scraper ring (2) according to any one of the preceding claims, **characterized in that** the running surface (6) of the oil-scraper blade (4) is formed from a peripheral wire (16) made from a high-strength material.

9. Oil-scraper ring (2) according to any one of the preceding claims, **characterized in that** the cross section of the upper blade flank (18) along the axis is convex.

10. Oil-scraper ring (2) according to any one of the preceding claims, **characterized in that** the cross section of the lower blade flank (20) along the axis is concave.

11. Oil scraper ring (2) according to one of the preceding claims, **characterized in that** a tangential force of the oil scraper ring (2) and/or a tangential force of the garter spring (12) is 52% to 68%, preferably 55% to 65% and more preferably 57% to 63% of the tangential force of an oil scraper ring with two scraper bars.

12. Oil-scraper ring (2) according to any one of the preceding claims, **characterised in that** the oil-scraper ring (2) has no radial oil channels.

13. Oil-scraper ring (2) according to any of claims 1 to 12, **characterised in that** the running surfaces (6) are each extended circumferentially in the region of the annular gap (22) and overlap each other in the axial direction.

## Revendications

1. Segment racleur d'huile (2) pour un piston d'un moteur à piston, avec
un corps annulaire (2),
une lame de raclage d'huile (4) périphérique,
le segment racleur d'huile (2) présentant entre un flanc annulaire (8) supérieur et un flanc annulaire inférieur (10) une hauteur (H) de 2 à 5 mm,
dans une section transversale radiale, la surface d'action (6) de la lame de raclage présentant un rayon de courbure (r) qui se situe entre 1/40 et 1/10 de la hauteur (H),
**caractérisé en ce que** la surface d'action (6) forme une hélice.

2. Segment racleur d'huile (2) selon la revendication 1, **caractérisé en ce que** le segment racleur d'huile (2) présente une hauteur (H) de 2,5 à 4 mm, de préférence de 3 à 3,5 mm.

3. Segment racleur d'huile (2) selon la revendication 1 ou 2, **caractérisé en ce que** le rayon de courbure (r) de la surface d'action (6) s'élève à de 1/30 à 1/15, de préférence de 1/25 à 1/20 de la hauteur (H) du segment racleur d'huile.

4. Segment racleur d'huile (2) selon la revendication 1, 2 ou 3, **caractérisé en ce que** le segment racleur d'huile (2) comprend en outre un extenseur (12).

5. Segment racleur d'huile (2) selon la revendication 1, 2, 3 ou 4, **caractérisé en ce que** l'extenseur (12) comprend un agencement de ressort spiroïdal avec un ou deux ressorts spiroïdaux (12).

6. Segment racleur d'huile (2) selon l'une quelconque des revendications précédentes, **caractérisé en ce qu'**une partie arrière de la lame racleuse (4) est revêtue d'un revêtement anti-usure (14).

7. Segment racleur d'huile (2) selon la revendication 6, **caractérisé en ce que** le revêtement (14) est du carbone diamant ou une couche amorphe extra-dure à base de carbone, laquelle améliore le pouvoir lubrifiant et fait preuve d'une dureté de jusqu'à 5000 HV 0.2, ainsi que d'une résistance thermique de jusqu'à 500°C et présente une épaisseur du revêtement de jusqu'à 25 µm.

8. Segment racleur d'huile (2) selon l'une quelconque des revendications précédentes, **caractérisé en ce que** la surface d'action (6) de la lame racleuse (4) est formée par un fil métallique (16) périphérique en une matière ultra-résistante.

9. Segment racleur d'huile (2) selon l'une quelconque des revendications précédentes, **caractérisé en ce que** dans une coupe le long de l'axe, le flan de lame (18) supérieur est de forme convexe.

10. Segment racleur d'huile (2) selon l'une quelconque des revendications précédentes, **caractérisé en ce que** dans une coupe le long de l'axe, le flan de lame (20) inférieur est de forme concave.

11. Segment racleur d'huile (2) selon l'une quelconque des revendications précédentes, **caractérisé en ce qu'**une force tangentielle du segment racleur d'huile (2) et/ou une force tangentielle du ressort spiroïdal (12) correspond à de 52% à 68%, de préférence à de 55% à 65%, de manière plus préférentielle à de 57% à 63% de la force tangentielle d'un segment racleur d'huile avec deux lames racleuses.

12. Segment racleur d'huile (2) selon l'une quelconque des revendications précédentes, **caractérisé en ce que** le segment racleur d'huile (2) ne comprend pas de canaux d'huile radiaux.

13. Segment racleur d'huile (2) selon l'une quelconque des revendications 1 à 12, **caractérisé en ce que** dans la région de la fente annulaire (22), les surfaces d'action (6) sont rallongées chaque fois en direction périphérique et se chevauchent dans la direction axiale.
